# EUROPÄISCHE PATENTSCHRIFT

(11) **EP 3 544 830 B1**
(45) Veröffentlichungstag und Bekanntmachung des Hinweises auf die Patenterteilung: **28.07.2021**
(21) Anmeldenummer: 17829927.7
(22) Anmeldetag: 24.11.2017
(51) Int. Cl.: B29L 30/00, B60C 23/10, B60C 23/12, B29C 73/16

(54) **KRAFTFAHRZEUG MIT EINER VERDICHTERANORDNUNG**
MOTOR VEHICLE COMPRISING A COMPRESSOR ASSEMBLY
VÉHICULE AUTOMOBILE COMPRENANT UN ENSEMBLE COMPRESSEUR

(30) Priorität: 24.11.2016 DE 102016122735
(43) Veröffentlichungstag der Anmeldung: 02.10.2019
(73) Patentinhaber: KT Projektentwicklungs-GmbH, 74072 Heilbronn (DE); Illinois Tool Works, Inc., Glenview, Illinois 60025 (US)
(72) Erfinder: TSIBERIDIS, Konstantin, 74199 Untergruppenbach (DE)
(74) Vertreter: Trinks, Ole
(86) Internationale Anmeldenummer: PCT/EP2017/080384
(87) Internationale Veröffentlichungsnummer: WO 2018/096108

(56) Entgegenhaltungen:
- WO-A1-2010/146373
- WO-A1-2015/075655
- WO-A1-2016/178137
- DE-A1-102015 115 642
- JP-A- 2007 039 013
- US-A- 1 713 899
- US-A- 2 317 636
- US-A- 2 506 677
- US-A1- 2010 059 143
- US-B1- 6 345 650

## Beschreibung

Die Erfindung betrifft ein Kraftfahrzeug mit einer Verdichteranordnung zur Druckmittelversorgung einer Reifenkavität eines Reifens eines Kraftfahrzeugrades.

Kraftfahrzeuge mit einer Verdichteranordnung sind aus dem Stand der Technik bekannt. Bei einer solchen Verdichteranordnung handelt es sich im Wesentlichen um einen im Kraftfahrzeug separat mitgeführten Kompressor, welcher neben Druckluft zum Aufpumpen eines Reifens bei zu geringem Reifeninnendruck auch ein Abdichtmittel bereitstellen, um eine Leckagestelle am Reifen zu beheben.

Allerdings sind derartige Verdichteranordnungen aufwändig in der Konstruktion sowie in der Handhabung, da diese an den beschädigten Reifen angeschlossen, mit Energie versorgt und dann betrieben werden müssen, und zwar solange, bis der Reifen entsprechend der Einschätzung der Bedienperson hinreichend aufgepumpt ist. Gegebenenfalls muss mit dem Kraftfahrzeug mehrfach angehalten werden, da der Reifen noch nicht hinreichend aufgepumpt ist oder da das Abdichtmittel die Leckagestelle nur allmählich abdichtet, so dass weiterhin Luft aus dem Reifen austreten kann. Zudem ist eine Zuführung von Energie zum Kompressor erforderlich.

US2317636, WO2015075655 A1 und US2506677 zeigen Verdichteranordnungen, die im Bereich einer Radnabenaufnahme verbaut sind.

Reifenabdichteinheiten sind aus den Dokumenten US6345650, WO201016373 A1, WO2016178137 A1 und US2010/0059143 A1 bekannt.

Der Erfindung liegt die Aufgabe zugrunde, auf energetisch günstige Weise die Betriebssicherheit eines Kraftfahrzeugs zu erhöhen und die Handhabung im Falle einer Reifenpanne zu vereinfachen.

Die Erfindung löst die Aufgabe mit einem Kraftfahrzeug gemäß Anspruch 1. Danach zeichnet sich das Kraftfahrzeug dadurch aus, dass die Verdichteranordnung einen Kompressionsraum aufweist, der bezogen auf das Kraftfahrzeugrad drehfest angeordnet ist, und wobei der Kompressionsraum und die Reifenkavität über eine Strömungsverbindung zur Förderung von Druckmittel von dem Kompressionsraum in die Reifenkavität verbunden sind, wobei dem Kraftfahrzeug eine Reifenabdichteinrichtung mit einem Abdichtmittelreservoir, das ein Abdichtmittel aufweist, zugeordnet ist, wobei das Abdichtmittelreservoir einen ersten Anschluss und einen zweiten Anschluss aufweist, wobei der erste Anschluss derart ausgebildet ist, dass er mit einer Reifenkavität eines zu reparierenden Reifens des Kraftfahrzeugs verbindbar ist, und wobei der zweite Anschluss derart ausgebildet ist, dass er mit einer kraftfahrzeugfesten Druckmittelquelle verbindbar ist, wobei das Abdichtmittelreservoir derart ausgebildet ist, dass das Abdichtmittel mittels des Druckmittels aus der Druckmittelquelle in die Reifenkavität des zu reparierenden Reifens gefördert wird, wenn der erste Anschluss mit der Reifenkavität des zu reparierenden Reifens strömungsverbunden ist und der zweite Anschluss mit der Druckmittelquelle strömungsverbunden ist.

Die Handhabung im Falle einer Reifenpanne ist dadurch erheblich erleichtert, da durch die Reifenabdichteinrichtung eine Notlauffähigkeit des Kraftfahrzeugs sichergestellt ist. Hierzu wird das Abdichtmittel in die Reifenkavität des zu reparierenden Reifens abgegeben, um eine Leckagestelle in diesem Reifen zu verschließen. Der vollständig fahrbereite Zustand wird durch die Verdichteranordnung hergestellt, welche die Reifenkavität des zu reparierenden Reifens, in die mit der Reifenabdichteinrichtung aus dem Abdichtmittelreservoir ein Abdichtmittel eingebracht wurde, mit einem Druckmittel befüllt. Dies kann durch die Verdichteranordnung im Fahrbetrieb des Kraftfahrzeugs erfolgen. Dadurch wird die Aufenthaltsdauer an einem Anhalteort nach einer Reifenpanne reduziert, was die Gefahr von Unfällen am Anhalteort senkt. Dadurch lassen sich auch infolge von Reifenpannen entstehende Staus in erheblichem Maße verkürzen.

Unter einer "Reifenkavität" ist der Hohlraum zwischen einer von der Profilseite des Reifens abgewandten Reifeninnenseite und einer Felge eines Kraftfahrzeugrades, insbesondere einer dem Reifenaufnahmebereich zugewandten Innenseite des Felgenbetts zu verstehen.

Bei dem Druckmittel kann es sich um ein gasförmige Fluid, beispielsweise um Druckluft oder um ein unter Druck stehendes Gas, handeln.

Der Kompressionsraum kann am oder im Kraftfahrzeugrad oder an einer mit dem Kraftfahrzeugrad drehfest gekoppelten Komponente ausgebildet sein, beispielsweise an oder in einer Radnabe, Bremsscheibe, Bremsscheibenaufnahme oder dergleichen.

Im Rahmen einer bevorzugten Ausgestaltung kann der der erste Anschluss einen flexiblen Leitungsabschnitt umfassen, über den der erste Anschluss mit der Reifenkavität des zu reparierenden Reifens verbindbar ist. Alternativ oder ergänzend kann der zweite Anschluss einen flexiblen Leitungsabschnitt umfassen, über den der zweite Anschluss mit der Druckmittelquelle verbindbar ist. Hiermit lässt sich auf einfache und flexible Weise eine Strömungsverbindung zwischen den Komponenten herstellen. Dabei ist der Leitungsabschnitt zur Leitung eines Druckmittels ausgebildet (Druckmittelleitung).

In vorteilhafter Weise kann zumindest ein Ventil vorgesehen sein, über das der erste Anschluss von der Reifenkavität des zu reparierenden Reifens fluidisch trennbar ist oder über das der zweite Anschluss von der Druckmittelquelle fluidisch trennbar ist. Auf diese Weise kann, insbesondere im verbundenen Zustand der Komponenten, eine Absperrung einer Strömungsverbindung zwischen den Komponenten erfolgen. Somit ist, beispielsweise auf einen Betätigungsschritt eines Benutzers hin, eine gezielte Abgabe des Abdichtmittels in die Reifenkavität des zu reparierenden Reifens möglich. Im Konkreten kann das Ventil an einem ersten Anschluss des Abdichtmittelreservoirs oder an einem zweiten Anschluss des Abdichtmittelreservoirs angeordnet sein. Ebenfalls denkbar ist, dass das Ventil an oder in einem radseitigen Anschluss angeordnet ist. Das oder die Ventile kann/können als selbstsperrendes Ventil, beispielsweise als Rückschlagventil, oder als ein durch die Bedienperson schaltbares Ventil ausgebildet sein.

Erfindungsgemäß kann die Reifenkavität des zu reparierenden Reifens über einen radseitigen Anschluss an dem Kraftfahrzeugrad mit dem ersten Anschluss des Abdichtmittelreservoirs strömungsverbunden sein, wobei die Verbindung zwischen radseitigem Anschluss und Reifenkavität über eine weitere Strömungsverbindung getrennt von der (ersten) Strömungsverbindung von dem Kompressionsraum in die Reifenkavität verläuft. Hiermit ist eine betriebssichere Ausführung geschaffen, bei der die (erste) Strömungsverbindung nicht durch die Reifenabdichteinrichtung beeinflusst wird. Beispielsweise ist eine uneingeschränkte Funktion der Strömungsverbindung von dem Kompressionsraum in die Reifenkavität auch dann sichergestellt, nachdem die Reifenabdichteinrichtung Reifen Abdichtmittel in die Reifenkavität ausgebracht hat.

In zweckmäßiger Weise kann der zu reparierende Reifen auf einer Felge umfassend eine Radnabenaufnahme angeordnet sein und der radseitige Anschluss kann im Bereich der Radnabenaufnahme oder an der Radnabenaufnahme angeordnet sein. Hiermit ist eine alternative Anordnung eines radseitigen Anschlusses geschaffen, die sich von einer üblichen Anordnung eines Radventils unterscheidet.

In vorteilhafter Weise kann die Felge eine Abdeckung für die Radnabenaufnahme ("Radnabendeckel") aufweisen, wobei der radseitige Anschlusspunkt derart angeordnet ist, dass dieser im montierten Zustand der Abdeckung an der Felge verdeckt ist. Hiermit ist der radseitige Anschlusspunkt vor Umwelteinflüssen und Manipulationen geschützt. Zudem ist eine optisch attraktive Ausgestaltung einer Felge begünstigt.

Im Rahmen einer bevorzugten Ausgestaltung kann der radseitige Anschluss wenigstens abschnittsweise, vorzugsweise ausschließlich, über einen austauschbaren, vorzugsweise flexiblen Leitungsabschnitt mit der Reifenkavität strömungsverbunden sein. Hiermit ist mit einfachen konstruktiven Mitteln ein Austausch des Leitungsabschnitts ermöglicht, so dass nach Ausbringen des Abdichtmittels über den radseitigen Anschluss in die Reifenkavität der ursprüngliche Zustand der Strömungsverbindung hergestellt werden kann. Durch Herausziehen des austauschbaren Leitungsabschnitts werden auch Reste des Abdichtmittels aus dem Kraftfahrzeugrad oder der Felge entfernt. Der austauschbare Leitungsabschnitt kann als flexibles Kunststoffrohr ausgebildet sein. Dabei kann der austauschbare Leitungsabschnitt zumindest einen Teil der (ersten) Strömungsverbindung zwischen Kompressionsraum und Reifenkavität oder radseitigem Anschlusspunkt und Reifenkavität bilden.

In zweckmäßiger Weise kann der austauschbare Leitungsabschnitt zumindest teilweise in einem in der Felge ausgebildeten Kanal angeordnet sein. Hierdurch ist der austauschbare Leitungsabschnitt vor Umwelteinflüssen und Manipulationen geschützt, so dass eine sichere Anordnung erreicht ist. Zudem wird die optische Erscheinung der Fahrzeugfelge nicht beeinträchtigt.

In vorteilhafter Weise kann die Druckmittelquelle als Druckmittelspeicher ausgebildet sein. Auf diese Weise ist eine konstruktiv einfache Druckmittelquelle geschaffen, da das Druckmittel lediglich gespeichert, jedoch nicht erzeugt werden muss. Zur Verwendung des Druckmittelspeichers muss daher von außen keine Energie zugeführt werden. Vorzugsweise kann eine mit einem Druckmittel gefüllte Reifenkavität eines weiteren Reifens des Kraftfahrzeugs als Druckmittelspeicher dienen. Hiermit ist eine hinsichtlich Konstruktion, Gewicht und Kosten vorteilhafte Ausgestaltung erzielt, da die Funktion des Druckmittelspeichers durch ein in einer Reifenkavität vorhandenes Druckmittel eines Reifens eines weiteren, am Kraftfahrzeug ohnehin vorhandenen Kraftfahrzeugrads erfüllt wird (montiertes Kraftfahrzeugrad oder mitgeführtes Ersatzrad). Ein separater Druckspeicher oder ein Kompressor sind nicht erforderlich. Ein Einbringen des Abdichtmittel in die Reifenkavität des zu reparierenden Reifens erfolgt dann aufgrund eines Druckausgleichs zwischen der Reifenkavität des Reifens des weiteren Fahrzeugrades und dem zu reparierenden Reifen. Für eine flexible Kopplung sollte die Druckmittelleitung in der Länge hinreichend dimensioniert sein, beispielsweise eine Länge von 2 bis 5 Metern aufweisen.

Im Konkreten kann die Verdichteranordnung mechanisch durch eine Relativbewegung zwischen dem Kraftfahrzeugrad und einem Radträger, an dem das Kraftfahrzeugrad drehbar gelagert ist, antreibbar oder angetrieben sein. Hierdurch ist eine konstruktiv einfache und technisch zuverlässige mechanische Ausgestaltung einer Verdichteranordnung erreicht, die die Drehbewegung eines Kraftfahrzeugrades und/oder einer Radnabe ausnutzt.

Alternativ hierzu kann die Verdichteranordnung elektrisch angetrieben sein. Dies hat den Vorteil, dass die Verdichteranordnung auch im Stillstand des Kraftfahrzeugs arbeiten und ein Druckmittel in eine Reifenkavität einbringen kann.

In zweckmäßiger Weise kann die Verdichteranordnung mit einer kraftfahrzeugseitigen Spannungsquelle verbunden sein. Hierdurch ist eine zuverlässige Energieversorgung der Verdichteranordnung gewährleistet.

In vorteilhafter Weise kann die Spannungsquelle derart ausgebildet sein, dass diese durch die Relativbewegung zwischen dem Kraftfahrzeugrad und einem Radträger, an dem das Kraftfahrzeugrad, insbesondere mittels einer Radnabe, drehbar gelagert ist, Strom erzeugt. Auf diese Weise wird der Strom unmittelbar dort erzeugt, wo er benötigt wird. Eine Verkabelung zur Energieversorgung zwischen Radträger und Karosserie des Kraftfahrzeugs zu einer fahrzeugseitigen Spannungsquelle kann entfallen.

In zweckmäßiger Weise können weitere, vorzugsweise sämtliche, am Kraftfahrzeug vorhandenen Kraftfahrzeugräder eine identische Ausgestaltung wie das beschriebene Kraftfahrzeugrad mit dem zu reparierenden Reifen aufweisen.

In einer vorteilhaften Ausführungsform wird elektrische Energie zum Betrieb der Verdichteranordnung von einer Hauptbatterie des Fahrzeugs über Schleifkontakte von der Radträgerseite zur Nabenseite übertragen.

In einer vorteilhaften Ausführungsform wird elektrische Energie zum Betrieb der Verdichteranordnung direkt nabenseitig über einen Energieerzeuger, der vorzugsweise wenigstens teilweise nabenseitiges angeordnet ist, bereitgestellt. Der Energieerzeuger ist vorzugsweise ein Generator. Der Energieerzeuger nutzt zur Stromerzeugung die rotatorische Relativbewegung zwischen Radträgerseite und Nabenseite aus.

In einer vorteilhaften Ausführungsform wird elektrische Energie zum Betrieb der Verdichteranordnung von der Hauptbatterie des Fahrzeugs über eine kontaktlose, vorzugsweise induktive, Übertragungseinrichtung von der Radträgerseite zur Nabenseite übertragen.

In einer vorteilhaften Ausführungsform wird elektrische Energie zum Betrieb der Verdichteranordnung direkt nabenseitig über einen Energiespeicher, der vorzugsweise als Akkumulator ausgeführt ist, bereitgestellt. Bevorzugt ist dabei die Kombination des Energiespeichers mit einem Energieerzeuger. Der Energieerzeuger ist vorzugsweise ein Generator. Der Energieerzeuger nutzt zur Stromerzeugung die rotatorische Relativbewegung zwischen Radträgerseite und Nabenseite aus.

Vorzugsweise nimmt die Verdichteranordnung ihren Betrieb autonom auf, wenn ein Reifendruckschwellenwert unterschritten ist.

Vorzugsweise umfasst die Verdichteranordnung ein Verdichterbauteil, dass eine oszillierende translatorische Bewegung in, insbesondere ausschließlich, radialer Richtung ausführt.

Vorzugsweise umfasst die Verdichteranordnung ein Verdichterbauteil, dass eine oszillierende translatorische Bewegung in, insbesondere ausschließlich, axialer Richtung ausführt.

Die Erfindung wird im Folgenden anhand der Figuren näher erläutert, wobei gleiche oder funktional gleiche Komponenten mit identischen Bezugszeichen bezeichnet, ggf. jedoch nur einmal mit Bezugszeichen versehen sind. Es zeigen:
Figur 1 eine Ausführungsform eines Kraftfahrzeugs in einer schematischen Ansicht;
Figur 2 ein Abdichtmittelreservoir des Kraftfahrzeuges aus Figur 1 in einer schematischen Schnittansicht;
Figur 3 eine Ausgestaltungsmöglichkeit einer Strömungsverbindung in die Reifenkavität in einer schematischen Ansicht.
Figuren 4
   bis 7 eine erste Variante einer Verdichteranordnung; und
Figuren 8
   bis 17 eine weitere Variante der Verdichteranordnung.

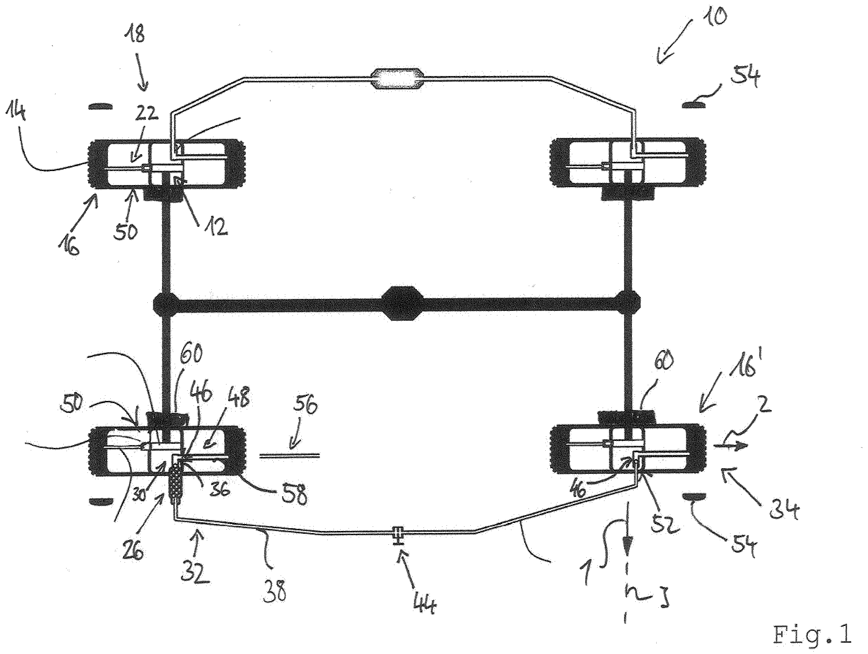

Figur 1 zeigt ein Kraftfahrzeug, welches insgesamt mit dem Bezugszeichen 10 bezeichnet ist. Eine axiale Richtung 1 liegt auf einer Rotationsachse 3 eines Kraftfahrzeugrades 18. Eine radiale Richtung 2 erstreckt sich orthogonal zur Rotationsachse 3. Das Kraftfahrzeug weist eine Verdichteranordnung 12 zur Druckmittelversorgung einer Reifenkavität 14 eines Reifens 16 des Kraftfahrzeugrades 18 auf.

Die Verdichteranordnung 12 weist einen Kompressionsraum (nicht dargestellt) auf, der bezogen auf das Kraftfahrzeugrad 18 drehfest angeordnet ist. Der Kompressionsraum und die Reifenkavität 14 sind über eine Strömungsverbindung 22 zur Förderung von Druckmittel, beispielsweise Druckluft, von dem Kompressionsraum in die Reifenkavität 14 verbunden.

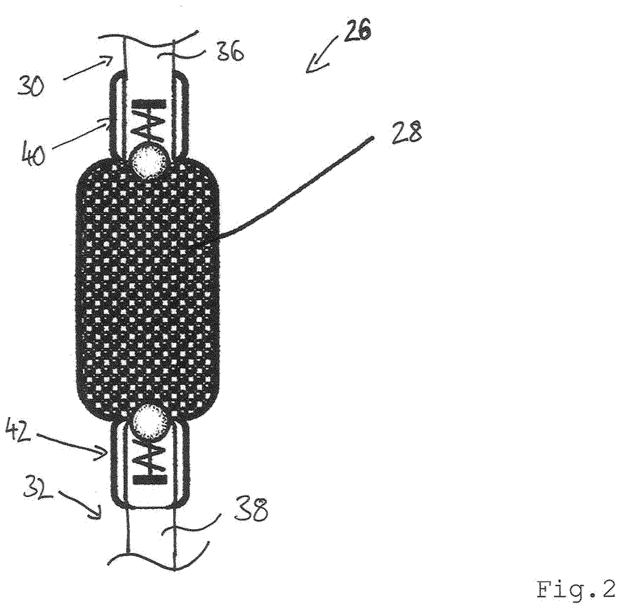

Dem Kraftfahrzeug 10 ist eine Reifenabdichteinrichtung 24 mit einem Abdichtmittelreservoir 26 (siehe Figur 2), das ein Abdichtmittel 28 aufweist, zugeordnet. Das Abdichtmittelreservoir 26 weist einen ersten Anschluss 30 und einen zweiten Anschluss 32 auf, wobei der erste Anschluss 30 derart ausgebildet ist, dass er mit einer Reifenkavität 14 eines zu reparierenden Reifens 16 des Kraftfahrzeugs 10 verbindbar ist. Der zweite Anschluss 32 ist derart ausgebildet, dass er mit einer kraftfahrzeugfesten Druckmittelquelle 34 verbindbar ist.

Das Abdichtmittelreservoir 26 ist derart ausgebildet, dass das Abdichtmittel 28 mittels des Druckmittels aus der Druckmittelquelle 34 in die Reifenkavität 14 des zu reparierenden Reifens 16 gefördert wird, wenn der erste Anschluss 30 mit der Reifenkavität 14 des zu reparierenden Reifens 16 strömungsverbunden ist und der zweite Anschluss 32 mit der Druckmittelquelle 34 strömungsverbunden ist.

Der erste Anschluss 30 umfasst einen flexiblen Leitungsabschnitt 36, über den er mit der Reifenkavität 14 des zu reparierenden Reifens 16 verbindbar ist. Der zweite Anschluss 32 umfasst einen flexiblen Leitungsabschnitt 38, über den er mit der Druckmittelquelle 34 verbindbar ist.

Es ist zumindest ein Ventil 40, 42, 44 vorgesehen, über das der erste Anschluss 30 von der Reifenkavität 14 des zu reparierenden Reifens 16 fluidisch trennbar ist oder über das der zweite Anschluss 32 von der Druckmittelquelle 34 fluidisch trennbar ist. Im vorliegenden Ausführungsbeispiel weist das Abdichtmittelreservoir am ersten Anschluss 30 ein Ventil 40 und am zweiten Anschluss 32 ein Ventil 42 auf.

Das Ventil 40 und das Ventil 42 sind jeweils als Rückschlagventil ausgebildet. Zudem kann der zweite Anschluss 32 ein durch eine Bedienperson regelbares Ventil 44 aufweisen (Regelventil).

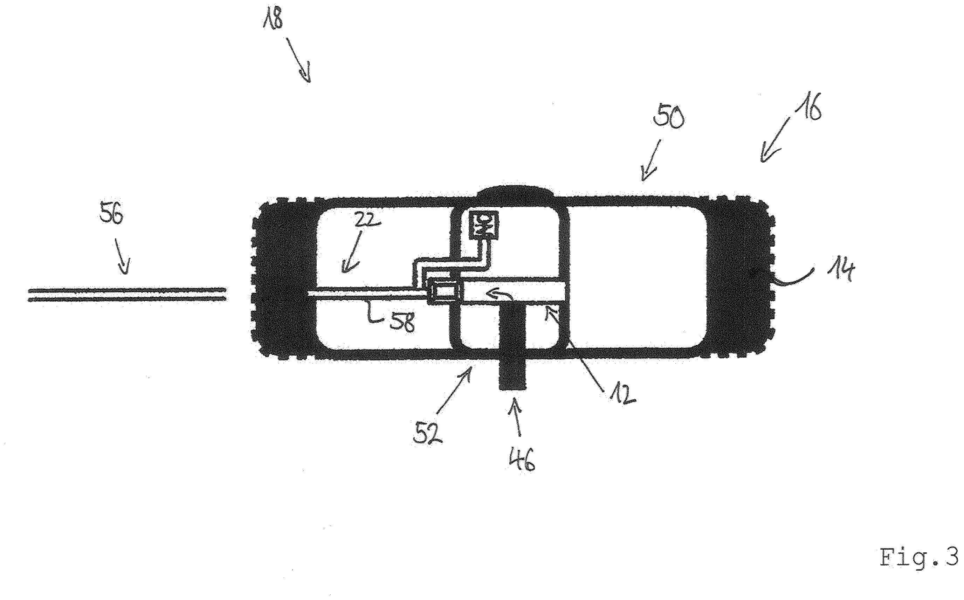

Die Reifenkavität 14 des zu reparierenden Reifens 16 kann über einen radseitigen Anschluss 46 an dem Kraftfahrzeugrad 18 mit dem ersten Anschluss 30 des Abdichtmittelreservoirs 26 strömungsverbunden sein, wobei die Verbindung zwischen radseitigem Anschluss 46 und Reifenkavität 14 zumindest abschnittsweise gemeinsam mit der Strömungsverbindung 22 von dem Kompressionsraum in die Reifenkavität 14 verlaufen kann (siehe Figur 3).

Die Reifenkavität 14 des zu reparierenden Reifens 16 kann alternativ hierzu über einen radseitigen Anschluss 46 an dem Kraftfahrzeugrad 18 mit dem ersten Anschluss 30 des Abdichtmittelreservoirs 26 strömungsverbunden sein, wobei die Verbindung zwischen radseitigem Anschluss 46 und Reifenkavität 14 über eine weitere Strömungsverbindung 48 getrennt von der (ersten) Strömungsverbindung 22 von dem Kompressionsraum in die Reifenkavität 14 verlaufen (siehe Figur 1).

Der zu reparierende Reifen 16 ist auf einer Felge 50 umfassend eine Radnabenaufnahme 52 angeordnet und der radseitige Anschluss 46 kann im Bereich der Radnabenaufnahme 52 oder an der Radnabenaufnahme 52 angeordnet sein. Die Felge 50 weist eine Abdeckung 54 für die Radnabenaufnahme 52 auf, wobei der radseitige Anschluss 46 derart angeordnet ist, dass dieser im montierten Zustand der Abdeckung 54 an der Felge 50 verdeckt ist.

Der radseitige Anschluss 46 ist wenigstens abschnittsweise, vorzugsweise ausschließlich, über einen austauschbaren Leitungsabschnitt 56 (in den Figuren aus Übersichtlichkeitsgründen separat dargestellt) mit der Reifenkavität 14 strömungsverbunden. Der austauschbare Leitungsabschnitt 56 ist (im montierten Zustand) zumindest teilweise in einem in der Felge 50 ausgebildeten Kanal 58 angeordnet.

Die Druckmittelquelle 34 ist als Druckmittelspeicher ausgebildet. Dabei dient eine mit einem Druckmittel gefüllte Reifenkavität 14 eines weiteren Reifens 16' des Kraftfahrzeugs 10 als Druckmittelspeicher.

Im vorliegenden Ausführungsbeispiel ist die Verdichteranordnung 12 mechanisch durch eine Relativbewegung zwischen dem Kraftfahrzeugrad 18 und einem Radträger 60, an dem das Kraftfahrzeugrad 18 drehbar gelagert ist, antreibbar ist. Zur Regelung der Verdichteranordnung 12 sind ein Magnetventil 62 und eine Regeleinheit 64 vorgesehen.

Bei nicht dargestellten Ausführungsformen kann die Verdichteranordnung 12 elektrisch angetrieben sein. Die Verdichteranordnung 12 kann mit einer kraftfahrzeugseitigen Spannungsquelle verbunden sein (nicht dargestellt). Die Spannungsquelle kann derart ausgebildet sein, dass diese durch die Relativbewegung zwischen dem Kraftfahrzeugrad 18 und einem Radträger 60, an dem das Kraftwerk 18 drehbar gelagert ist, Strom erzeugt.

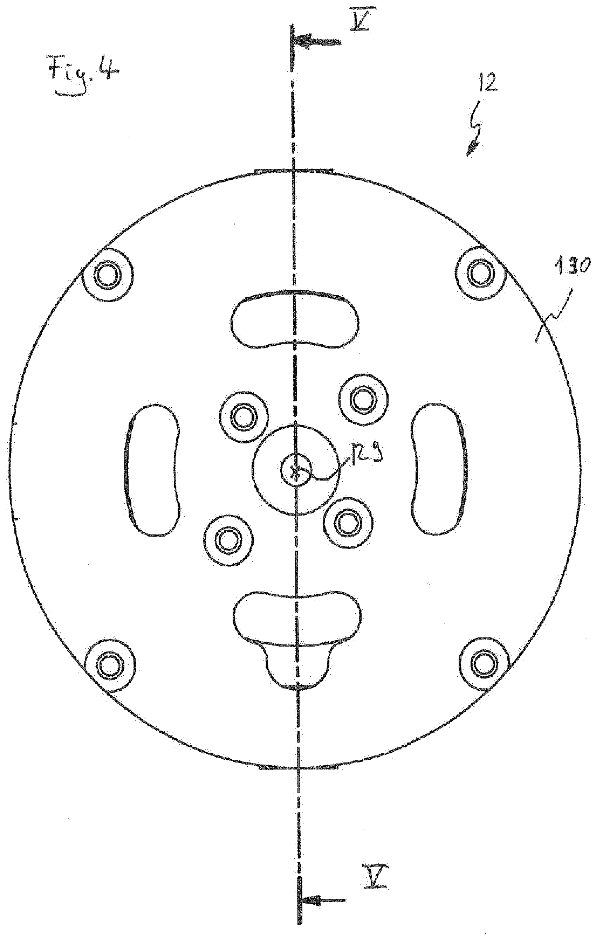

Figur 4 zeigt eine erste Ausführungsform einer Verdichteranordnung 12 im Detail in einer Seitenansicht. Die Verdichteranordnung 12 wird elektrisch betreiben und ist in der Radnabenaufnahme 52 angeordnet. Die Verdichteranordnung 12 umfasst ein erstes nabenseitiges Gehäuseteil 130 sowie ein zweites nabenseitiges Gehäuseteil 132 die drehfest miteinander verbunden sind.

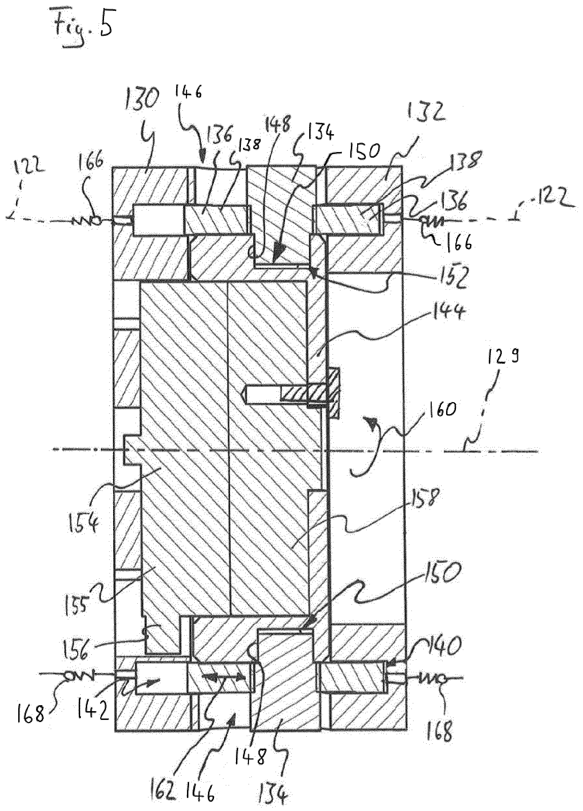

In Figur 5 ist die Verdichteranordnung aus Figur 3 entlang der der Linie V-V mit Blick in Richtung der entsprechenden Pfeile geschnitten dargestellt.

Ein nabenseitiges Getriebeteil trägt das Bezugszeichen 134. In Figur 5 ist erkennbar, dass die Verdichteranordnung 12 mehrere der nabenseitigen Getriebeteile 134 aufweist. Mit den nabenseitigen Getriebeteilen 134 ist ein Ringkolben 136 verbunden, der ein Verdichterbauteil 138 darstellt.

Der Ringkolben 136 ist als Doppelkolben ausgebildet und begrenzt einen ersten Kompressionsraum 140 sowie einen zweiten Kompressionsraum 142. Der erste Kompressionsraum 140 und der zweite Kompressionsraum 142 sind jeweils als Ringräume ausgeführt.

Die nabenseitigen Getriebeelemente 134 stehen mit einem antriebsseitigen Getriebeteil 144 derart in Eingriff, dass sie mit diesen zusammenwirken können. Die nabenseitigen Getriebeelemente 134 bilden gemeinsam mit dem antriebsseitigen Getriebeteil 144 eine Getriebeanordnung 145, die ein Kurvengetriebe darstellt. Die nabenseitige Getriebeteile 134 sind in dem zweiten nabenseitigen Gehäuseteil 132 in schlitzartigen Ausnehmungen 146 gelagert. Durch die Lagerung in den schlitzartigen Ausnehmungen 146 können die nabenseitigen Getriebeteile 134 sich lediglich entlang der Richtung der Rotationsachse 3 translatorisch gegenüber dem zweiten nabenseitigen Gehäuseteil 132 bewegen, sie sind jedoch an einer Rotation gegenüber dem zweiten nabenseitigen Gehäuseteil 132 und dem Verdichterbauteil 138 gehindert.

Die nabenseitigen Getriebeteile 134 stehen wie bereits erwähnt im Eingriff mit dem antriebsseitigen Getriebeteil 144. Die Eingriffsabschnitte 148 der jeweiligen nabenseitigen Getriebeteile 134 greifen dabei in eine an dem antriebsseitigen Getriebeteil 144 befindliche Kurvenbahn 150 ein. Die Kurvenbahn 150 ist eine Ausführungsform einer Zylinderkurve 152.

Im Inneren der nabenseitigen Gehäuseteile 130 und 132 ist ein elektrischer Antrieb 154 angeordnet. Der elektrische Antrieb 154 ist mit einem ersten Abschnitt 155 über einen Zapfen 156 drehfest mit dem ersten nabenseitigen Gehäuseteil 130 und über dieses indirekt mit dem zweiten nabenseitigen Gehäuseteil 132 verbunden. Ein zweiter Abschnitt 158 des elektrischen Antriebs 154 ist gegenüber dem ersten Abschnitt 155 rotierbar und drehfest mit dem antriebsseitigen Getriebeteil 144 verbunden.

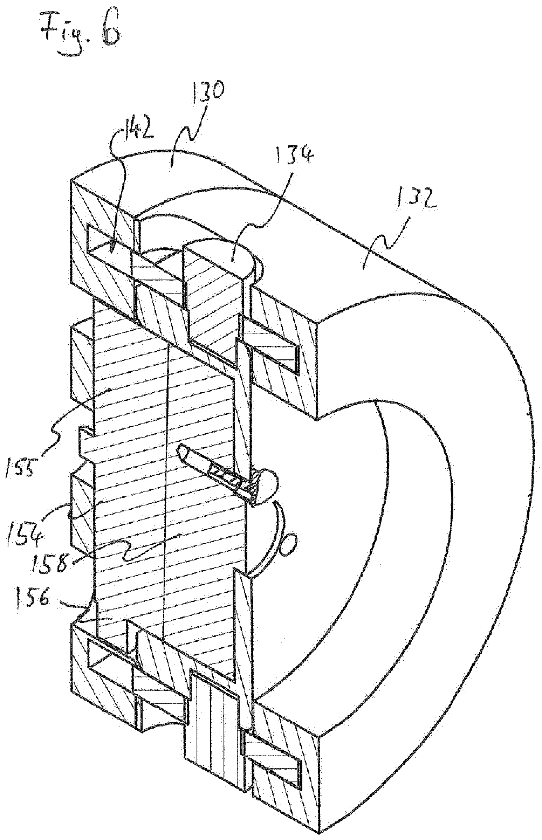

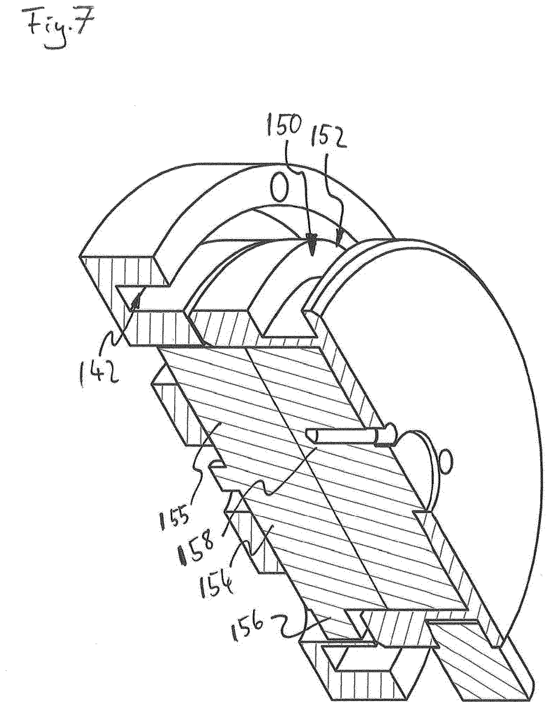

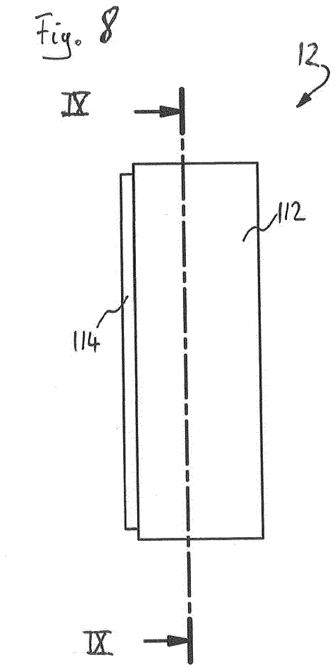

In Figur 6 ist die Verdichteranordnung 12 aus den Figuren 4 und 5 in einer perspektivischen und geschnittenen Darstellung gezeigt. In Figur 7 ist die Verdichteranordnung 12 in einer der Figur 6 ähnlichen perspektivischen Darstellung gezeigt, wobei lediglich eines der nabenseitigen Getriebeteile 134 dargestellt ist. Der Ringkolben 136, das zweite nabenseitige Getriebeteil 134 und das erste nabenseitige Gehäuseteil 130 sind jeweils nicht dargestellt. In Figur 7 ist daher der Verlauf der Kurvenbahn 150 besonders deutlich sichtbar.

Im Betrieb der Verdichteranordnung 12 rotiert der zweite Abschnitt 158 des elektrischen Antriebs 154 gegenüber dem ersten Abschnitt 155. Hierdurch wird das antriebsseitige Getriebeteil 144 gegenüber den nabenseitigen Gehäuseteilen 130 und 132, sowie den nabenseitigen Getriebeteilen 34 in Rotation, die durch den Pfeil 160 in Figur 5 angedeutet ist, versetzt.

Die nabenseitigen Getriebeteile 134 stehen mit einem antriebsseitigen Getriebeteil 144 derart in Eingriff, dass sie mit diesen zusammenwirken können. Durch dieses Zusammenwirken wird die eben genannte rotatorische Relativbewegung 160 in eine oszillierende translatorische Bewegung 162 der nabenseitigen Getriebeteile 134 und damit der Verdichterbauteile 138 also der Ringkolben 136 umgewandelt. Durch die oszillierende translatorische Bewegung wird das Volumen des ersten Kompressionsraums 140 und des zweiten Kompressionsraums 142 abwechselnd vermindert und vergrößert, wodurch in den Kompressionsräumen 140, 142 befindliches Druckmittel, welches vorliegend Luft ist, komprimiert, also unter Druck gesetzt und gefördert. Die Luft, also das Druckmittel, wird in einem jeweiligen Förderhub der Ringkolben 36 über zur Reifenkavität 14 hin öffnende Rückschlagventile 166 zur Reifenkavität 14 hin über die Druckmittelleitung gefördert. In einem jeweiligen Saughub der Ringkolben 136 öffnen zum jeweiligen Kompressionsraum 140, 142 hin öffnende Rückschlagventile 168 und Luft kann in die Kompressionsräume 140 und 142 einströmen.

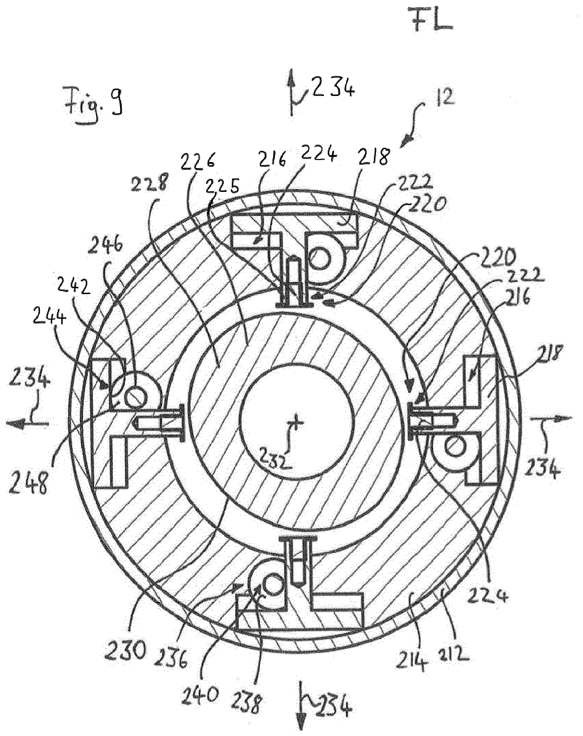

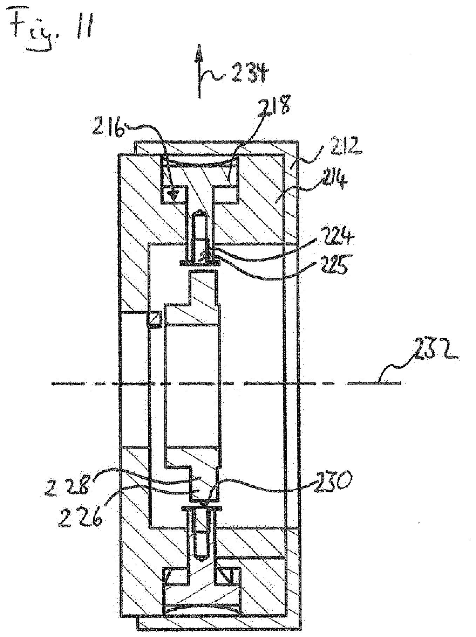

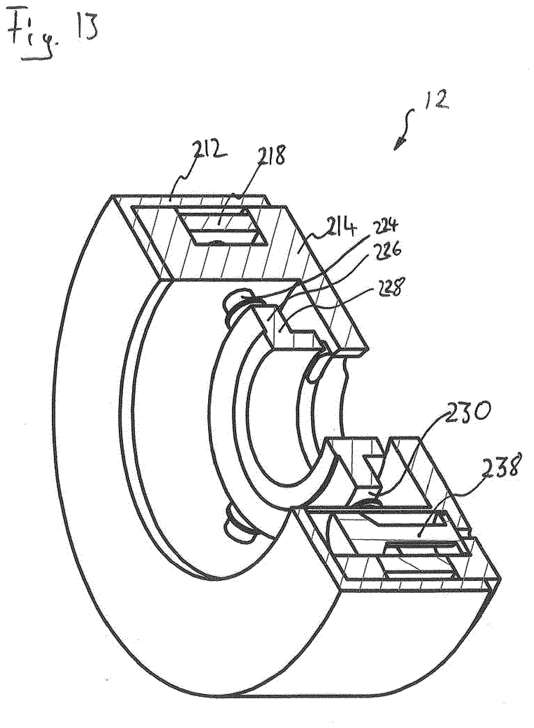

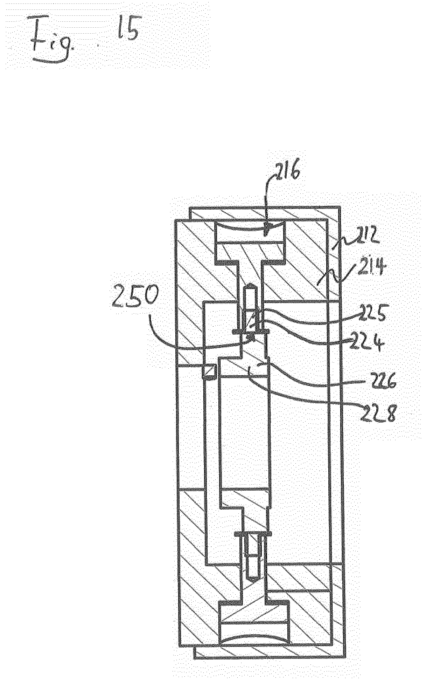

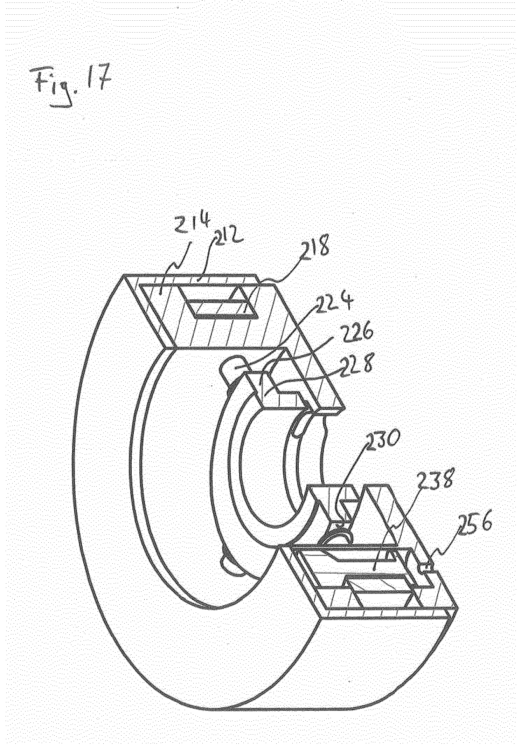

Figur 9 bis 17 zeigen eine weitere Ausführungsform einer Verdichteranordnung 12 im Detail. Die Verdichteranordnung 12 wird mechanisch durch die rotatorische Relativbewegung zwischen Radträgerseite und Nabenseite betreiben und ist im Bereich des Radlagers angeordnet. Die Verdichteranordnung 12 weist eine radiale Bewegung eines Verdichterbauteils 218 auf.

In Figur 9 ist eine erste Ausführungsform einer Verdichteranordnung 12 im Detail gezeigt. Die Verdichteranordnung 12 umfasst ein erstes Gehäuseteil 212 sowie ein zweites Gehäuseteil 214.

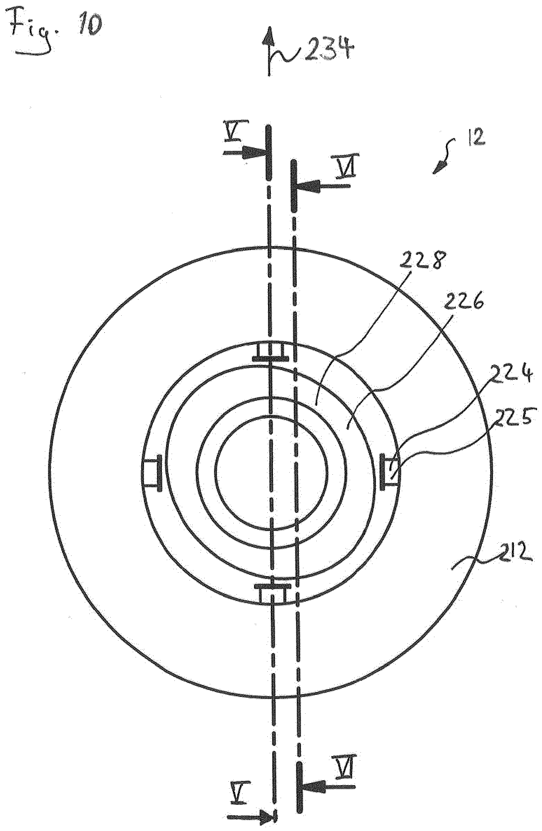

In Figur 10 ist die Verdichteranordnung 12 aus Figur 2 entlang der Linie X-X geschnitten dargestellt. Die Verdichteranordnung 12 umfasst vorliegend insgesamt vier nabenseitige Kompressionsräume 216, von denen lediglich zwei ein Bezugszeichen tragen.

Jedem der Kompressionsräume 216 ist ein nabenseitiges Verdichterbauteil 218 zugeordnet, von denen ebenfalls jeweils nur zwei ein Bezugszeichen tragen. Die Verdichteranordnung 12 umfasst mehrere Getriebe 220, wobei jedem der Kompressionsräume 216 ein Getriebe 220 zugeordnet ist. Die Getriebe 220 sind vorliegend jeweils als Kurvengetriebe 222 ausgeführt.

Die Getriebe 220 weisen jeweils ein nabenseitiges Getriebeteil 224 auf. Die nabenseitigen Getriebeteile 224 sind jeweils durch Stößelabtriebe 225 gebildet. Die Verdichterbauteile 218 sind dabei einstückig mit den Stößelabtrieben 225 bzw. nabenseitigen Getriebeteilen 224 ausgebildet. Die nabenseitigen Getriebeteile 224 der Getriebe 220 können jeweils mit einem radträgerseitigen Getriebeteil 226 der Verdichteranordnung 212 zusammenwirken.

Wie aus Figur 10 ersichtlich, weist die Verdichteranordnung 12 lediglich ein einziges radträgerseitiges Getriebeteil 226 auf, das mit jedem der nabenseitigen Getriebeteile 224 zusammenwirken kann. Das radträgerseitige Getriebeteil 226 ist als Scheibenkurve 228 mit einer äußeren Kurvenkontur 230 ausgebildet.

In Figur 10 ist die Verdichteranordnung 212 in einer Freilaufbetriebslage FL gezeigt. In der Freilaufbetriebslage FL wirken die nabenseitigen Getriebeteile 224 nicht mit dem radträgerseitigen Getriebeteil 226 zusammen.

Die nabenseitigen Getriebeteile 224 befinden sich in der Freilaufbetriebslage FL vorteilhafterweise, wie in Figur 10 gezeigt, in einer Position, in der sie unabhängig von der Ausrichtung des radträgerseitigen Getriebeteils 26 dieses nicht kontaktieren können. Dies wird über Kupplungseinrichtungen 236 erreicht, die jedem der nabenseitigen Getriebeteile 224 zugeordnet ist. Die Kupplungseinrichtungen 236 umfassen jeweils ein Kupplungselement 238. In der in Figur 9 gezeigten Freilaufbetriebslage befinden sich Kupplungselemente 238 jeweils in einer Sperrstellung 240. In dieser Sperrstellung 240 des Kupplungselements 238 sind die nabenseitigen Getriebeteile 224 jeweils an dem Zusammenwirken und vorliegend auch an dem Kontakt mit dem radträgerseitigen Getriebeteil 226 gehindert.

In der Sperrstellung 240 liegt ein Sperrabschnitt 242 der jeweiligen Kupplungselemente 238 jeweils an einem Anschlagsabschnitt 244 der jeweiligen nabenseitigen Getriebeteile 224 an. Der Anschlagsabschnitt 244 ist dabei vorliegend an dem einstückig mit dem nabenseitigen Getriebeteil 224 ausgebildeten Verdichterbauteil 218 ausgebildet.

Die Kupplungselemente 238 sind vorliegend stiftartig ausgebildet und umfassen neben dem Sperrabschnitt 242 auch jeweils einen Freigabeabschnitt 246 sowie einen Übergangsabschnitt 248.

Der Sperrabschnitt 242 ist dabei zylindrisch mit einem ersten Durchmesser ausgebildet und der Freigabeabschnitt 246 zylindrisch mit einem zweiten Durchmesser. Der Übergangsabschnitt 248 vom Sperrabschnitt 242 zum Freigabeabschnitt 246 weist eine Kegelstumpfform auf.

Der Freigabeabschnitt 246 ist in Richtung der radialen Richtung 34 versetzt zum Sperrabschnitt 242 angeordnet. Bewegt sich eines der Kupplungselemente 238 von der Freigabestellung in die Sperrstellung 240, so drängt es das ihm zugeordnete nabenseitige Getriebeteil 224 in die Position, in der es mit dem radträgerseitigen Getriebeteil 226 nicht in Kontakt treten kann.

Die Kupplungselemente 238 sind jeweils über Federn 249 in die Sperrstellung vorgespannt. Über einen Druckmittelkanal 256 sind die Kupplungselemente 238 jeweils durch Beaufschlagung mit Druckmittel in Freigabestellung überführbar.

Sobald die Beaufschlagung mit Druckmittel über den Druckmittelkanal 256 unterbrochen ist, bewegen sich die Kupplungselemente 238 zurück in die Sperrstellung, da sie Federvorgespannt sind.

Die nabenseitigen Getriebeteile 224 bzw. die Verdichterbauteile 218 werden dabei nach radial außen gedrängt und zwar in eine Stellung, in der sie von dem radial innenliegenden radträgerseitigen Getriebeteil 226 abheben. Die Verdichteranordnung 212 befindet sich dann in der Freilaufstellung FL. Durch den konisch verlaufenden Übergangsabschnitt 248 wird dieses Drängen des nabenseitigen Getriebeteils 224 nach radial außen ermöglicht und der Übergang von Freigabestellung zu Sperrstellung erfolgt ruckfrei und graduell.

Da die nabenseitigen Getriebeteile 224, vorliegend über Federn, ebenfalls vorgespannt sind, müssen die Federn 249 zur Vorspannung der Kupplungselemente 38 stärker als die Federn zur Vorspannung der nabenseitigen Getriebeteile ausgeführt sein. Diese Vorspannung im Zusammenspiel mit dem konischen Übergangsabschnitt 248 ermöglicht das Drängen der nabenseitigen Getriebeteile 224 in die abgehobene Position.

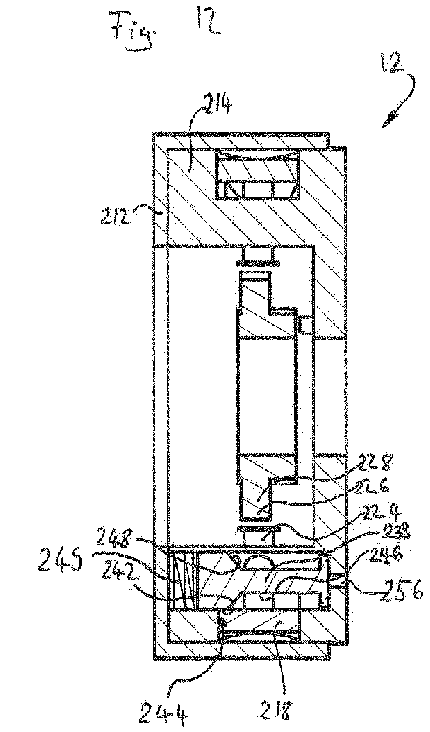

In Figur 12 ist die Sperrstellung der Kupplungselemente 238 besonders gut sichtbar an einem der Kupplungselemente 238 gezeigt.

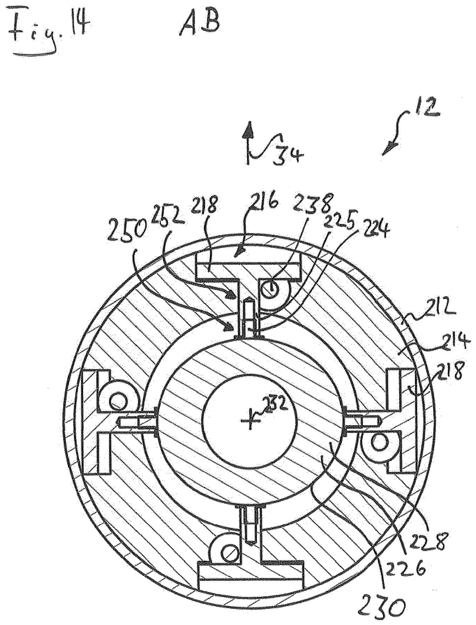

Die Figuren 14 bis 17 zeigen die Verdichteranordnung 12 der Figuren 9 bis 13 in verschiedenen Ansichten und Schnitten in einer Arbeitsbetriebslage AB gezeigt.

In Figur 14 ist ersichtlich, dass die nabenseitigen Getriebeelemente 224 das radträgerseitige Getriebeelement 226 in der Arbeitsbetriebslage AB kontaktieren. Ein jeweiliger Kontaktpunkt der nabenseitigen Getriebeteile 224 mit dem radträgerseitigen Getriebeelement 226 trägt das Bezugszeichen 250.

Wie in Figur 14 ersichtlich, sind die nabenseitigen Getriebeteile 224 jeweils in einer Linearführung 252 derart gelagert, dass sie eine Translationsbewegung des Verdichterbauteils 218 ermöglichen.

Bei der in den Figuren 9 bis 17 gezeigten Ausführungsform liegt der Kontaktpunkt 250, in radialer Richtung 234 gesehen, jeweils zwischen der Linearführung 252 und der Rotationsachse 232.

Die nabenseitigen Getriebeteile 224, die jeweils einen Stößelabtrieb 225 darstellen, sind über die Außenkontur 230 der Kurvenscheibe 228 bzw. des radträgerseitigen Getriebeteils 226 antreibbar.

Im Betrieb der Verdichteranordnung 12, wie sie in Figur 14 bis 17 in der Arbeitsbetriebslage AB gezeigt ist, bewegen sich die nabenseitigen Komponenten rotatorisch relativ zu den radträgerseitigen Komponenten. Bezogen auf das Fahrzeug stehen die radträgerseitigen Komponenten still, während die nabenseitigen Komponenten gegenüber dem Fahrzeug rotieren.

In der Darstellung von Figur 14 entspricht dies einer festen Verortung des radträgerseitigen Getriebeteils 226, während sich die Gehäuseteile 212 und 214 mitsamt den nabenseitigen Getriebeteilen 224 um die Rotationsachse 232 drehen.

Die Kontaktpunkte 250 der nabenseitigen Getriebeteile 224 gleiten dabei entlang der Außenkontur 230 der Scheibenkurve 228. Da die Außenkontur 230 der Scheibenkurve 228 einen Verlauf um die Rotationsachse 232 aufweist, der vom Verlauf einer konzentrisch um die Rotationsachse 232 verlaufenden Kreisbahn abweicht, wird die eben beschriebene Rotationsbewegung in eine Linearbewegung der nabenseitigen Getriebeteile 224 und der damit einstückig ausgebildeten Verdichterbauteile 218 umgewandelt.

Die Verdichterbauteile 218 führen also eine oszillierende translatorische Bewegung in radialer Richtung 234 aus.

Dabei wird das Volumen der Kompressionsräume 216 jeweils verringert und vergrößert. In den Kompressionsräumen 216 der Verdichteranordnung 212 befindet sich Druckmittel, vorliegend Luft, das jeweils zu einer Reifenkavität 27 gefördert wird, wenn sich das Volumen der Kompressionsräume 216 verringert.

Vergrößert sich das Volumen der Kompressionsräume 216, so schließen Rückschlagventile, die die Verbindung zwischen Reifenkavität und Kompressionsraum 216 unterbrechen. Im Gegenzug öffnen Rückschlagventile, die ein Ansaugen von Umgebungsluft als Druckmittel in die Kompressionsräume 216 ermöglichen.

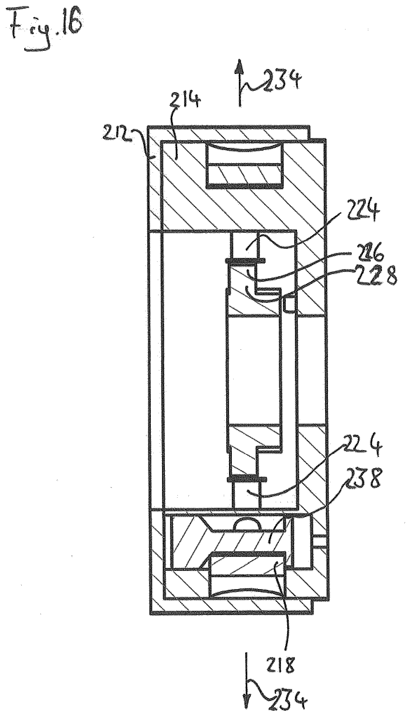

Aus einem Vergleich der Figuren 12 und 16 wird die Funktionsweise der Kupplungseinrichtung 240 besonders gut ersichtlich.

In Figur 16 ist das eine gezeigte Kupplungselement 238 in der Freigabestellung. Das Verdichterbauteil 218 kann sich in radialer Richtung frei bewegen.

## Patentansprüche

1. Kraftfahrzeug (10) mit einer Verdichteranordnung (12) zur Druckmittelversorgung einer Reifenkavität (14) eines Reifens (16) eines Kraftfahrzeugrades (18), wobei die Verdichteranordnung (12) einen Kompressionsraum aufweist, der bezogen auf das Kraftfahrzeugrad (18) drehfest angeordnet ist, und wobei der Kompressionsraum und die Reifenkavität (14) über eine Strömungsverbindung (22) zur Förderung von Druckmittel von dem Kompressionsraum in die Reifenkavität (14) verbunden sind,
**dadurch gekennzeichnet, dass**
dem Kraftfahrzeug (10) eine Reifenabdichteinrichtung (24) mit einem Abdichtmittelreservoir (26), das ein Abdichtmittel (28) aufweist, zugeordnet ist, wobei das Abdichtmittelreservoir (26) einen ersten Anschluss (30) und einen zweiten Anschluss (32) aufweist, wobei der erste Anschluss (30) derart ausgebildet ist, dass er mit einer Reifenkavität (14) eines zu reparierenden Reifens (16) des Kraftfahrzeugs (10) verbindbar ist, und wobei der zweite Anschluss (32) derart ausgebildet ist, dass er mit einer kraftfahrzeugfesten Druckmittelquelle (34) verbindbar ist, wobei das Abdichtmittelreservoir (26) derart ausgebildet ist, dass das Abdichtmittel (28) mittels des Druckmittels aus der Druckmittelquelle (34) in die Reifenkavität (14) des zu reparierenden Reifens (16) gefördert wird, wenn der erste Anschluss (30) mit der Reifenkavität (14) des zu reparierenden Reifens (16) strömungsverbunden ist und der zweite Anschluss (32) mit der Druckmittelquelle (34) strömungsverbunden ist, wobei die Reifenkavität (14) des zu reparierenden Reifens (16) über einen radseitigen Anschluss (46) an dem Kraftfahrzeugrad (18) mit dem ersten Anschluss (30) des Abdichtmittelreservoirs (26) strömungsverbunden ist, wobei die Verbindung zwischen radseitigem Anschluss (46) und Reifenkavität (14) über eine weitere Strömungsverbindung (48) getrennt von der Strömungsverbindung (22) von dem Kompressionsraum in die Reifenkavität (14) verläuft, und wobei der zu reparierende Reifen (16) auf einer Felge (50) umfassend eine Radnabenaufnahme (52) angeordnet ist und der radseitige Anschluss (46) im Bereich der Radnabenaufnahme (52) oder an der Radnabenaufnahme (52) angeordnet ist.

2. Kraftfahrzeug (10) nach Anspruch 1,
**dadurch gekennzeichnet, dass**
der erste Anschluss (30) einen flexiblen Leitungsabschnitt (36) umfasst, über den er mit der Reifenkavität (14) des zu reparierenden Reifens (16) verbindbar ist und/oder dass der zweite Anschluss (32) einen flexiblen Leitungsabschnitt (38) umfasst, über den er mit der Druckmittelquelle (34) verbindbar ist.

3. Kraftfahrzeug (10) nach Anspruch 1 oder 2,
**dadurch gekennzeichnet, dass**
wenigstens ein Ventil (40, 42, 44) vorgesehen ist, über das der erste Anschluss (30) von der Reifenkavität (14) des zu reparierenden Reifens (16) fluidisch trennbar ist oder über das der zweite Anschluss (32) von der Druckmittelquelle (34) fluidisch trennbar ist.

4. Kraftfahrzeug (10) nach einem der voranstehenden Ansprüche,
**dadurch gekennzeichnet, dass**
die Felge (50) eine Abdeckung (54) für die Radnabenaufnahme (52) aufweist, wobei der radseitige Anschluss (46) derart angeordnet ist, dass der radseitige Anschluss (46) im montierten Zustand der Abdeckung (54) an der Felge (50) verdeckt ist.

5. Kraftfahrzeug (10) nach einem der voranstehenden Ansprüche,
**dadurch gekennzeichnet, dass**
der radseitige Anschluss (46) wenigstens abschnittsweise, vorzugsweise ausschließlich, über einen austauschbaren Leitungsabschnitt (56) mit der Reifenkavität (14) strömungsverbunden ist.

6. Kraftfahrzeug (10) nach Anspruch 5,
**dadurch gekennzeichnet, dass**
der austauschbare Leitungsabschnitt (56) zumindest teilweise in einem in der Felge (50) ausgebildeten Kanal (58) angeordnet ist.

7. Kraftfahrzeug (10) nach einem der voranstehenden Ansprüche,
**dadurch gekennzeichnet, dass**
die Druckmittelquelle (34) als Druckmittelspeicher ausgebildet ist, vorzugsweise wobei eine mit einem Druckmittel gefüllte Reifenkavität (14) eines weiteren Reifens (16') des Kraftfahrzeugs (10) als Druckmittelspeicher dient.

8. Kraftfahrzeug (10) nach einem der voranstehenden Ansprüche,
**dadurch gekennzeichnet, dass**
die Verdichteranordnung (12) mechanisch durch eine rotatorische Relativbewegung zwischen dem Kraftfahrzeugrad (18) und einem Radträger (60), an dem das Kraftfahrzeugrad (18) drehbar gelagert ist, antreibbar ist.

9. Kraftfahrzeug (10) nach einem der Ansprüche 1 bis 7,
**dadurch gekennzeichnet, dass**
die Verdichteranordnung (12) elektrisch angetrieben ist, vorzugsweise und dass die Verdichteranordnung (12) im Bereich der Radnabenaufnahme (52), vorzugsweise in der Radnabenaufnahme (52) angeordnet ist.

10. Kraftfahrzeug (10) nach Anspruch 9,
**dadurch gekennzeichnet, dass**
die Verdichteranordnung (12) mit einer kraftfahrzeugseitigen Spannungsquelle verbunden ist.

11. Kraftfahrzeug (10) nach Anspruch 10,
**dadurch gekennzeichnet, dass**
die Spannungsquelle derart ausgebildet ist, dass diese durch die Relativbewegung zwischen dem Kraftfahrzeugrad (18) und einem Radträger (60), an dem das Kraftfahrzeugrad (18) drehbar gelagert ist, Strom erzeugt.

12. Kraftfahrzeug (10) nach einem der voranstehenden Ansprüche,
**dadurch gekennzeichnet, dass**
das Abdichtmittelreservoir (26) im Bereich, vorzugsweise in, der Radnabenaufnahme (52) angeordnet ist und dass der zweite Anschluss (32) schaltbar mit der Verdichteranordnung (12) fluidisch verbunden ist, wobei Abdichtmittel (28) automatisch in die Reifenkavität gefördert wird, wenn der Druck in der Reifenkavität mit einer Rate abfällt, die einen festgelegten oder festlegbaren Grenzwert übersteigt.

13. Kraftfahrzeug (10) nach einem der voranstehenden Ansprüche,
**dadurch gekennzeichnet, dass**
die Verdichteranordnung (12) ein sich in radialer Richtung (2) oszillierend translatorisch bewendendes Verdichterbauteil umfasst.

14. Kraftfahrzeug (10) nach einem der voranstehenden Ansprüche,
**dadurch gekennzeichnet, dass**
die Verdichteranordnung (12) ein sich in axialer Richtung (1) oszillierend translatorisch bewendendes Verdichterbauteil umfasst.

## Claims

1. Motor vehicle (10) comprising a compressor assembly (12) for supplying pressure medium to a tyre cavity (14) of a tyre (16) of a motor vehicle wheel (18), wherein the compressor assembly (12) has a compression space which is arranged non-rotatably with respect to the motor vehicle wheel (18), and wherein the compression space and the tyre cavity (14) are connected via a flow connection (22) for conveying pressure medium from the compression space into the tyre cavity (14),
**characterized in that**
the motor vehicle (10) is assigned a tyre-sealing device (24) with a sealant reservoir (26) which has a sealant (28), wherein the sealant reservoir (26) has a first connection (30) and a second connection (32), wherein the first connection (30) is designed in such a manner that it is connectable to a tyre cavity (14) of a tyre (16) to be repaired of the motor vehicle (10), and wherein the second connection (32) is designed in such a manner that it is connectable to a pressure medium source (34) mounted on the motor vehicle, wherein the sealant reservoir (26) is designed in such a manner that the sealant (28) is conveyed by the pressure medium from the pressure medium source (34) into the tyre cavity (14) of the tyre (16) to be repaired when the first connection (30) is connected in terms of flow to the tyre cavity (14) of the tyre (16) to be repaired and the second connection (32) is connected in terms of flow to the pressure medium source (34), wherein the tyre cavity (14) of the tyre (16) to be repaired is connected in terms of flow via a wheel-side connection (46) on the motor vehicle wheel (18) to the first connection (30) of the sealant reservoir (26), wherein the connection between the wheel-side connection (46) and the tyre cavity (14) runs separately, via a further flow connection (48), from the flow connection (22) from the compression space into the tyre cavity (14), and wherein the tyre (16) to be repaired is arranged on a rim (50) comprising a wheel hub receptacle (52), and the wheel-side connection (46) is arranged in the region of the wheel hub receptacle (52) or at the wheel hub receptacle (52).

2. Motor vehicle (10) according to Claim 1,
**characterized in that**
the first connection (30) comprises a flexible line portion (36) via which said connection is connectable to the tyre cavity (14) of the tyre (16) to be repaired, and/or **in that** the second connection (32) comprises a flexible line portion (38) via which said connection is connectable to the pressure medium source (34).

3. Motor vehicle (10) according to Claim 1 or 2,
**characterized in that**
at least one valve (40, 42, 44) is provided via which the first connection (30) is fluidically separable from the tyre cavity (14) of the tyre (16) to be repaired or via which the second connection (32) is fluidically separable from the pressure medium source (34).

4. Motor vehicle (10) according to one of preceding claims,
**characterized in that**
the rim (50) has a covering (54) for the wheel hub receptacle (52), wherein the wheel-side connection (46) is arranged in such a manner that the wheel-side connection (46) is concealed when the covering (54) is mounted on the rim (50).

5. Motor vehicle (10) according to one of the preceding claims,
**characterized in that**
the wheel-side connection (46) is connected in terms of flow to the tyre cavity (14) at least in sections, preferably exclusively, via an exchangeable line portion (56).

6. Motor vehicle (10) according to Claim 5,
**characterized in that**
the exchangeable line portion (56) is at least partially arranged in a channel (58) formed on the rim (50).

7. Motor vehicle (10) according to one of the preceding claims,
**characterized in that**
the pressure medium source (34) is in the form of a pressure medium store, preferably wherein a pressure-medium-filled tyre cavity (14) of a further tyre (16') of the motor vehicle (10) serves as the pressure medium store.

8. Motor vehicle (10) according to one of the preceding claims,
**characterized in that**
the compressor assembly (12) is mechanically drivable by means of a rotational relative movement between the motor vehicle wheel (18) and a wheel carrier (60) on which the motor vehicle wheel (18) is rotatably mounted.

9. Motor vehicle (10) according to one of Claims 1 to 7,
**characterized in that**
the compressor assembly (12) is electrically driven, preferably, and **in that** the compressor assembly (12) is arranged in the region of the wheel hub receptacle (52), preferably in the wheel hub receptacle (52).

10. Motor vehicle (10) according to Claim 9,
**characterized in that**
the compressor assembly (12) is connected to a motor-vehicle-side voltage source.

11. Motor vehicle (10) according to Claim 10,
**characterized in that**
the voltage source is designed in such a manner that it generates current by means of the relative movement between the motor vehicle wheel (18) and a wheel carrier (60) on which the motor vehicle wheel (18) is rotatably mounted.

12. Motor vehicle (10) according to one of the preceding claims,
**characterized in that**
the sealant reservoir (26) is arranged in the region of, preferably in, the wheel hub receptacle (52), and **in that** the second connection (32) is fluidically connected in a switchable manner to the compressor assembly (12), wherein sealant (28) is automatically conveyed into the tyre cavity if the pressure in the tyre cavity drops at a rate which exceeds a defined or definable limit.

13. Motor vehicle (10) according to one of the preceding claims,
**characterized in that**
the compressor assembly (12) comprises a compressor component moving in an oscillating and translational manner in the radial direction (2).

14. Motor vehicle (10) according to one of the preceding claims,
**characterized in that**
the compressor assembly (12) comprises a compressor component moving in an oscillating and translational manner in the axial direction (1).

## Revendications

1. Véhicule automobile (10) comprenant un ensemble compresseur (12) destiné à alimenter en milieu sous pression une cavité de pneumatique (14) d'un pneumatique (16) d'une roue de véhicule automobile (18), l'ensemble compresseur (12) comportant une chambre de compression qui est disposé solidairement en rotation par rapport à la roue de véhicule automobile (18) et la chambre de compression et la cavité de pneumatique (14) étant reliées par une liaison fluidique (22) pour transporter le milieu sous pression de la chambre de compression jusque dans la cavité de pneumatique (14),
**caractérisé en ce que**
un moyen d'étanchéité de pneumatique (24), pourvu d'un réservoir d'agent d'étanchéité (26) qui comporte un agent d'étanchéité (28), est associé au véhicule automobile (10), le réservoir d'agent d'étanchéité (26) comportant un premier raccord (30) et un deuxième raccord (32), le premier raccord (30) étant conçu de façon à pouvoir être relié à une cavité (14) d'un pneumatique (16) à réparer du véhicule automobile (10), et le deuxième raccord (32) étant conçu de façon à pouvoir être relié à une source de milieu sous pression (34) fixée au véhicule automobile, le réservoir d'agent d'étanchéité (26) étant conçu de telle manière que l'agent d'étanchéité (28) soit transporté au moyen du milieu sous pression de la source de milieu sous pression (34) jusque dans la cavité (14) du pneumatique (16) à réparer lorsque le premier raccord (30) est relié fluidiquement à la cavité (14) du pneumatique (16) à réparer et que le deuxième raccord (32) est relié fluidiquement à la source de milieu sous pression (34), la cavité (14) du pneumatique (16) à réparer étant reliée fluidiquement au premier raccord (30) du réservoir d'agent d'étanchéité (26) par le biais d'un raccord côté roue (46) au niveau de la roue de véhicule automobile (18), la liaison entre le raccord côté roue (46) et la cavité de pneumatique (14) s'étendant de la chambre de compression jusque dans la cavité de pneumatique (14) par le biais d'une autre liaison fluidique (48), séparée de la liaison fluidique (22), et le pneumatique (16) à réparer étant disposé sur une jante (50) comprenant un logement de moyeu de roue (52) et le raccord côté roue (46) étant disposé dans la zone du logement de moyeu de roue (52) ou sur le logement de moyeu de roue (52).

2. Véhicule automobile (10) selon la revendication 1,
**caractérisé en ce que**
le premier raccord (30) comprend une portion de conduite flexible (36) par le biais de laquelle il peut être relié à la cavité (14) du pneumatique (16) à réparer et/ou **en ce que** le deuxième raccord (32) comprend une portion de conduite flexible (38) par le biais de laquelle il peut être relié à la source de milieu sous pression (34).

3. Véhicule automobile (10) selon la revendication 1 ou 2,
**caractérisé en ce que**
au moins une valve (40, 42, 44) est prévue par le biais de laquelle le premier raccord (30) peut être séparé fluidiquement de la cavité (14) du pneumatique (16) à réparer ou par le biais de laquelle le deuxième raccord (32) peut être séparé fluidiquement de la source de milieu sous pression (34).

4. Véhicule automobile (10) selon l'une des revendications précédentes,
**caractérisé en ce que**
la jante (50) comporte un élément de recouvrement (54) destiné au logement de moyeu de roue (52), le raccord côté roue (46) étant disposé de telle sorte que le raccord côté roue (46) soit recouvert lorsque l'élément de recouvrement (54) est assemblé sur la jante (50).

5. Véhicule automobile (10) selon l'une des revendications précédentes,
**caractérisé en ce que**
le raccord côté roue (46) est relié fluidiquement à la cavité de pneumatique (14) au moins par portions, de préférence exclusivement, par une portion de conduite remplaçable (56).

6. Véhicule automobile (10) selon la revendication 5,
**caractérisé en ce que**
la portion de conduite remplaçable (56) est disposée au moins partiellement dans un canal (58) formé dans la jante (50).

7. Véhicule automobile (10) selon l'une des revendications précédentes,
**caractérisé en ce que**
la source de milieu sous pression (34) est conçue comme un réservoir de milieu sous pression, de préférence une cavité (14), remplie d'un milieu sous pression, d'un autre pneumatique (16') du véhicule automobile (10) servant de réservoir de milieu sous pression.

8. Véhicule automobile (10) selon l'une des revendications précédentes,
**caractérisé en ce que**
l'ensemble compresseur (12) peut être entraîné mécaniquement par un mouvement de rotation relatif entre la roue de véhicule automobile (18) et un support de roue (60) sur lequel la roue de véhicule automobile (18) est montée de manière rotative.

9. Véhicule automobile (10) selon l'une des revendications 1 à 7,
**caractérisé en ce que**
l'ensemble compresseur (12) est entraîné électriquement, de préférence et **en ce que** l'ensemble compresseur (12) est disposé dans la zone du logement de moyeu de roue (52), de préférence dans le logement de moyeu de roue (52).

10. Véhicule automobile (10) selon la revendication 9,
**caractérisé en ce que**
l'ensemble compresseur (12) est relié à une source de tension côté véhicule automobile.

11. Véhicule automobile (10) selon la revendication 10,
**caractérisé en ce que**
la source de tension est conçue de façon à générer de l'électricité par le mouvement relatif entre la roue de véhicule automobile (18) et un support de roue (60) sur lequel la roue de véhicule automobile (18) est montée de manière rotative.

12. Véhicule automobile (10) selon l'une des revendications précédentes,
**caractérisé en ce que**
le réservoir d'agent d'étanchéité (26) est disposé dans la zone, de préférence dans le logement de moyeu de roue (52), et **en ce que** le deuxième raccord (32) est reliée fluidiquement à l'ensemble compresseur (12) de manière commutable, un agent d'étanchéité (28) étant transporté automatiquement jusque dans la cavité de pneumatique lorsque la pression dans la cavité de pneumatique chute d'un taux qui dépasse une valeur limite spécifiée ou spécifiable.

13. Véhicule automobile (10) selon l'une des revendications précédentes,
**caractérisé en ce que**
l'ensemble compresseur (12) comprend un composant de compresseur qui se déplace en translation de manière oscillante dans la direction radiale (2).

14. Véhicule automobile (10) selon l'une des revendications précédentes,
**caractérisé en ce que**
l'ensemble compresseur (12) comprend un composant de compresseur qui se déplace en translation de manière oscillante dans la direction axiale (1).
